# EUROPEAN PATENT APPLICATION

(11) **EP 4 600 038 A1**
(43) Date of publication of application: **13.08.2025**
(21) Application number: 25156506.5
(22) Date of filing: 07.02.2025
(51) Int. Cl.: B32B 37/06, B32B 37/08, B32B 37/10, E04C 2/24, B32B 37/00, B32B 39/00

(54) **METHOD TO PRODUCE SANDWICH PANELS FROM RECYCLED MATERIALS, SANDWICH PANELS BASED ON RECYCLED MATERIALS AND RELATED COMPUTER PROGRAM**

(30) Priority: 08.02.2024 IT 202400002644
(71) Applicant: Recarbon S.r.l., 20025 Legnano (MI) (IT)
(72) Inventor: GRATI, Luca, 20025 Legnano (MI) (IT); GRATI, Paolo, 20025 Legnano (MI) (IT); PACCHETTI, Patrick, 20025 Legnano (MI) (IT)
(74) Representative: Studio Torta S.p.A.

(57) **Abstract**

A method for producing sandwich panels (1) having at least a first outer layer (2), a second outer layer (3) and an inner core (4) interposed between the first outer layer (2) and the second outer layer (3) is described; the method comprises a step of feeding, during which one or more first components (7) and one or more second components (8) and a matrix (9) are provided; a step of interposing, during which the matrix (9) is interposed between the one or more first components (7) and the one or more second components (8) to form a base structure (10); a step of compressing, during which a pressure is applied onto the base structure (10); a step of heating, during which the base structure (10) is heated to a temperature of at least 100°C; and a step of cooling, during which the base structure (10) is cooled. Each first component (7) and each second component (8) comprises recycled fibres and the step of cooling is performed following the step of heating. No binding agents are used between the one or more first components (7) and the matrix (9) and between the one or more second components (8) and the matrix (9).

## Description

### CROSS-REFERENCE TO RELATED APPLICATIONS

This patent application claims priority from Italian patent application no. 102024000002644 filed on February 8, 2024, the entire disclosure of which is incorporated herein by reference.

### TECHNICAL FIELD

The present invention relates to a method for producing sandwich panels having at least a first outer layer, a second outer layer and a core interposed between the first outer layer and the second outer layer.

The present invention also relates to a sandwich panel having at least a first outer layer, a second outer layer and a core interposed between the first outer layer and the second outer layer and being produced by means of the method.

The present invention also relates to a computer program product for controlling the performance of a method for producing sandwich panels.

### BACKGROUND OF THE INVENTION

Sandwich panels are known which comprise a central core having a first face and a second face opposite to the first face and a first outer layer and a second outer layer glued, respectively, on the first face and the second face of the central core.

Solutions are known for which the first outer layer and the second outer layer comprise fibres such as carbon fibres, glass, etc.

The use of carbon fibres allows sandwich panels to be obtained with excellent mechanical characteristics and at the same time with a reduced weight.

It is for example known to use sandwich panels of this type to produce containers, wall parts, vehicle parts, etc.

During the production of such sandwich panels, it is necessary to use binding agents which are applied onto the central core and/or on the outer layers to obtain a stable sandwich panel.

The use of binding agents in the production of sandwich panels is described for example in documents US-A-2020262992, EP-A-3609663, US-A-2022297412 and DE-A-2511878.

Although the known sandwich panels allow high performance, there is a need in the industry for improved sandwich panels.

In particular, there is a need to produce sandwich panels without the application of binding agents.

There is also a need to obtain sandwich panels with a reduced environmental impact.

### DESCRIPTION OF THE INVENTION

Aim of the present invention is to realise an improvied method that allows the production of sandwich panels without the use of binding agents and with a reduced environmental impact.

A further aim of the present invention is the realization of improving sandwich panels that are stable even without the application of binding agents.

Furthermore, an aim of the present invention is the realization of a computer program for controlling a method for producing sandwich panels.

The aforesaid aims are achieved by the present invention, as it relates to the method as defined in the independent claim. Preferred alternative embodiments are protected in the respective dependent claims.

The aforesaid aims are achieved by the present invention, as it relates to a sandwich panel according to claim 13.

The aforesaid aims are achieved by the present invention, as it relates to a computer program product as defined in claim 14.

### BRIEF DESCRIPTION OF THE DRAWINGS

The present invention will now be described with reference to the enclosed drawings, showing some non-limiting embodiment examples thereof, wherein:
- Figure 1 schematically shows a sandwich panel, with parts removed for clarity; and
- Figure 2 schematically shows a machine for performing the method according to the present invention, with parts removed for clarity.

### PREFERRED EMBODIMENTS OF THE INVENTION

The elements and features shown in the various preferred embodiments, including the drawings, may be combined with each other without thereby departing from the scope of protection of the present application as described below.

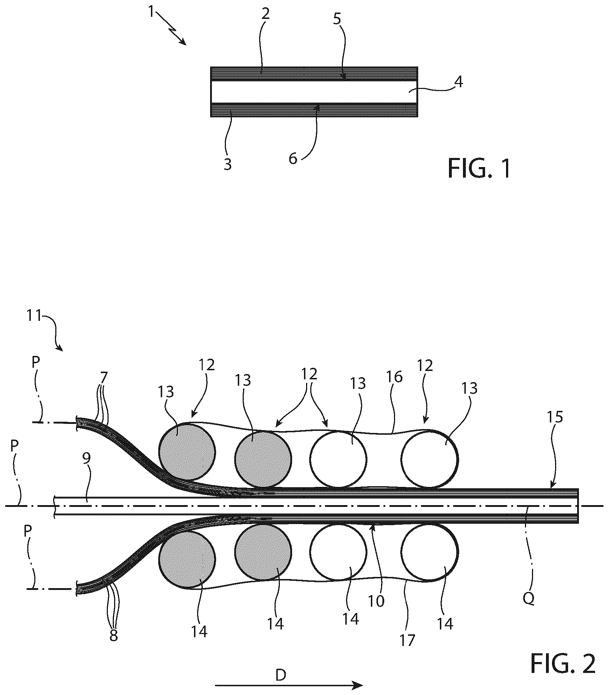

With reference to Figure 1, number 1 denotes a sandwich panel 1.

The sandwich panel 1 comprises a first outer layer 2, a second outer layer 3 and an inner core 4 interposed between the first outer layer 2 and the second outer layer 3.

In more detail, the inner core 4 comprises a first face 5 and a second face 6 opposite to the first face 5.

The first layer 2 and the second layer 3 are (permanently) connected to the inner core 4, more specifically and respectively to the first face 5 and the second face 6.

In further detail, the first layer 2 may have a thickness in a range between 0.1 mm and 4.0 mm, in particular a range between 0.5 mm and 2.5 mm, even more in particular between 1.0 mm and 2.0 mm and/or the second layer 3 may have a thickness in a range between 0.1 mm and 4.0 mm, in particular a range between 0.5 mm and 2.5 mm, even more in particular between 1.0 mm and 2.0 mm and/or the core 4 may have a thickness in a range between 1.0 mm and 100.0 mm, more in particular between 3.0 mm and 50.0 mm, even more in particular between 5.0 mm and 30.0 mm.

Each of the first layer 2 and the second layer 3 comprises recycled fibres such as for example recycled carbon fibres and/or recycled aramid fibres and/or recycled glass fibres and/or recycled natural fibres. The use of recycled fibres allows for a reduced environmental impact.

Further, the first layer 2 and the second layer 3 are a non-woven fabric.

Furthermore, each of the first layer 2 and the second layer 3 also comprises a thermoplastic such as for example polypropylene, polyamide, polyethylene terephthalate, polycarbonate, polyparaphenylene sulfide and polyetherimide.

For example, each of the first layer 2 and the second layer 3 may comprise between 50 and 80 % by weight of the thermoplastic and/or between 20 and 50 % by weight of the recycled fibres.

Each of the first layer 2 and the second layer 3 consists of the thermoplastic and the recycled fibres.

The first layer 2 and the second layer 3 have the same composition. Alternatively, the first layer 2 and the second layer 3 have different respective compositions.

A portion of the thermoplastic of the first layer 2 and/or the second layer 3 may be a recycled thermoplastic or not.

The core 4 may comprise, in particular consist of, one or more of the following materials: thermoplastics (such as for example polyolefins, polyamides, polyesters, polyvinylchloride, polyethylene, polystyrene, etc.), thermosets (such as for example polyurethane, polyimides, polysulfides, etc.), open cell structured foams, closed cell structured foams, balsa wood, syntactic foams, self-expanding components, honeycomb structures.

For example, the core 4 may be only of thermoplastic material or may comprise a thermoplastic and/or other components.

The core 4 may or may not comprise recycled elements.

The sandwich panel 1 is obtained by a method comprising:
- a step of feeding, during which one or more first components 7 and one or more second components 8, each comprising recycled fibres, and a matrix 9 are provided;
- a step of interposing, during which matrix 9 is interposed between the one or more first components 7 and the one or more second components 8 to form a base structure 10;
- a step of compressing, during which a pressure is applied onto the base structure 10;

- a step of heating, during which the base structure 10 and/or the one or more first components 7 and/or the one or more second components 8 are heated to a temperature of at least 100°C, in particular to a temperature between 100°C and 400°C; and
- a step of cooling, during which the base structure 10 is cooled.

The step of cooling is performed following the step of heating, in particular to cool the base structure 10 as previously heated during the step of heating.

Following the various steps described above, in particular the step of feeding, the step of interposing, the step of compressing, the step of heating and the step of cooling, a final base structure 15 is obtained from which one or more sandwich panels 1 can be obtained.

It should be noted that the one or more first components 7 give rise to the first layer 2, the one or more second components 8 give rise to the second layer 3 and the matrix 9 gives rise to the core 4.

For this reason, each first component 7 and each second component 8 comprises recycled fibres such as for example recycled carbon fibres and/or recycled aramid fibres and/or recycled glass fibres and/or recycled natural fibres.

Further, each first component 7 and each second component 8 also comprises a thermoplastic such as for example polypropylene, polyamide, polyethylene terephthalate, polycarbonate, polyparaphenylene sulfide and polyetherimide.

For example, each first component 7 and each second component 8 may comprise between 50 to 80 % by weight of the thermoplastic and/or between 20 to 50 % by weight of the recycled fibres.

Each first component 7 and each second component 8 is composed of the thermoplastic and recycled fibres.

The first components 7 and the second components 8 have the same composition. Alternatively, the first components 7 and the second components 8 have different respective compositions.

A portion of the thermoplastic of each first component 7 and/or each second component 8 may be a recycled thermoplastic or not.

Preferably, each first component 7 and/or each second component 8 comprises a portion in non-woven fabric. More preferably, each first component 7 and/or each second component 8 may be entirely a non-woven fabric.

The matrix 9 may comprise, in particular consist of, one or more of the following materials: thermoplastics (such as for example polyolefins, polyamides, polyesters, polyvinylchloride, polyethylene, polystyrene, etc.), thermosets (such as for example polyurethane, polyimides, polysulfides, etc.), open cell structured foams, closed cell structured foams, balsa wood, syntactic foams, self-expanding components, honeycomb structures.

In particular, the matrix 9 may be a thermoplastic matrix. For example, the matrix 9 may at least partially comprise a recycled thermoplastic.

In the method proposed herein, no binding agents are used between the one or more first components 7 and the matrix 9 and between the one or more second components 8 and the matrix 9.

According to a variant not shown, a static method is realized in which the one or more first components 7, the matrix 9 and the one or more second components 8 are inserted into a press during the step of feeding and are not removed from the press and are not advanced during performance of the step of compressing and the step of heating.

According to a preferred but non-limiting alternative variant, a production machine 11 is used as schematically shown in Figure 2. The production machine 11 bases its operation on the fact that the one or more first components 7, the one or more second components 8 and the matrix 9 are advanced along respective advancement paths P. The base structure 10 is also advanced along a second advancement path Q, more specifically a second rectilinear advancement path Q, and the steps of feeding, heating and cooling are performed during the advancement of the base structure 10 along the second advancement path Q.

Preferably, the method provides that during the step of feeding the one or more first components 7, the one or more second components 8 and the matrix 9 are advanced along the respective first advancement paths P and to a combination station at which the one or more first components 7 and the matrix 9 and the one or more second components 8 and the matrix 9 come into contact with each other to obtain the base structure 10.

Furthermore, during the step of compressing, the step of heating and the step of cooling the base structure 10 is advanced along the second advancement path Q and/or the one or more first components 7 and/or the one or more second components 8 and/or the matrix 9 along the respective advancement paths P.

Preferably but not necessarily, during the step of compressing a pressure of at least 1 bar is applied, in particular a pressure in a range between 1 bar to 30 bar, more in particular between 2 bar to 10 bar.

Preferably but not necessarily, during the step of cooling the base structure 10 is cooled to a temperature of less than 50°C.

With reference to Figure 2, during the step of compressing pressure is applied by a plurality of pairs of cylinders 12, each pair of cylinders 12 having a first cylinder 13 and a second cylinder 14.

In particular, the production machine 11 comprises the pairs of cylinders 12.

The production machine 11 also comprises a first belt 16 wound around the first cylinders 13 and a second belt 17 wound around the second cylinders 14.

More specifically, each of the first belt 16 and the second belt 17 comprises a respective surface configured to contact the base structure 10.

In more detail, the surface of the first belt 16 and the surface of the second belt 17 is configured to directly contact, respectively, the one or more first components 7 and the one or more second components 8.

Advantageously, each surface may have non-stick properties such that the first belt 16 and/or the second belt 17 do not stick to the base structure 10.

Each of the first belt 16 and the second belt 17 may be, for example, a teflon-treated glass fabric and/or a steel belt.

With particular reference to Figure 2, the first cylinders 13 and the second cylinders 14, and preferably also the first belt 16 and the second belt 17, are arranged so that the base structure 10 is interposed between each first cylinder 13 and the respective second cylinder 14, and preferably also between the first belt 16 and the second belt 17.

In more detail, each first cylinder 13 and the respective second cylinder 14 are spaced apart, in particular in a direction perpendicular to the second advancement path Q.

Preferably, therefore, also the first belt 16 and the second belt 17 are spaced apart from each other.

In particular, each first cylinder 13 and the respective second cylinder 14, and preferably consequently also the first belt 16 and the second belt 17, are spaced apart from each other creating a space in which the base structure 10 advances during the advancement along the advancement path Q.

In addition, the pairs of cylinders 12 are separated from each other along a forward direction (and sense) D of the base structure 10 along the advancement path Q. In particular, the forward direction (and sense) D is parallel to the second advancement path Q.

In further detail, the first cylinders 13 are separated from each other along the forward direction (and sense) D and the second cylinders 14 are also separated from each other along the forward direction (and sense) D.

Furthermore, the first cylinders 13 and the second cylinders 14 are configured to act, in particular, through the first belt 16 and the second belt 17 respectively on the base structure 10 and/or respectively, on one or more first components 7 and one or more second components 8.

In further detail, each first cylinder 13 and each second cylinder 14 is rotatable about an axis of rotation.

During performance of the method, the first cylinders 13 and the second cylinders 14 rotate around the respective axes of rotation, in particular also to advance the base structure 10 along the advancement path Q.

In further detail, each first cylinder 13 and each second cylinder 14 has an outer surface being in contact with, respectively, the first belt 16 and the second belt 17 which are in contact with, respectively, the one or more first components 7 and the one or more second components 8.

Furthermore, the respective first cylinders 13 and the respective second cylinders 14 of one or more pairs of cylinders 12 can be spaced so as to act, respectively, on one or more first components 7 and one or more second components 8 before they come into contact with the matrix 9.

More specifically, a minimum distance between each first cylinder 13 and the respective second cylinder 14, in particular between the respective outer surfaces, may decrease in the forward direction of the base structure 10. In other words, the respective minimum distance of a first pair of cylinders 12 may be greater than the respective minimum distance of a second pair of cylinders 12 that is arranged downstream of the first pair of cylinders 12.

In this way it is possible to increase the pressure acting on the base structure 10. Further, it is possible to compress the base structure 10.

Furthermore, the respective first cylinders 13 and the respective second cylinders 14 of one or more pairs of cylinders 12 are arranged to direct, respectively, the one or more first components 7 and the one or more second components 8 towards and into contact with the matrix 9.

Advantageously but not necessarily, the respective first cylinders 13 and/or the respective second cylinders 14 of one or more pairs of cylinders 12) are heating cylinders (indicated in grey in Figure (2) to perform the step of heating).

More specifically, the heating cylinders are at a temperature of at least 100°C, preferably at a temperature between 100°C and 400°C, and heat during the step of heating the one or more first components 7 and/or the one or more second components 8 and/or the base structure 10, in particular thanks to their temperature and to the heat transfer with the one or more first components 7 or the one or more second components 8.

Furthermore, the respective first cylinders 13 and/or the respective second cylinders 14 of one or more other pairs 12 of cylinders are cooling cylinders (indicated in white in Figure 2) and are controlled at a temperature lower than the temperature of the heating cylinders to perform the step of cooling.

More specifically, the cooling cylinders are at a temperature of less than 20°C, in particular at a temperature that is in a range between 5°C and 20°C.

The heating cylinders are arranged upstream of the cooling cylinders along the second advancement path Q. This ensures that the base structure 10 is heated prior to its cooling.

In particular, the respective temperatures of the heating cylinders may increase in the forward direction (and sense) D.

In addition, the respective temperatures of the cooling cylinders may decrease in the forward direction (and sense) D.

The production machine 11 may be provided with a processing unit having a memory.

The processing unit may comprise a computer program, loadable into a memory of the processing unit and comprising instructions suitable for performing the steps of the aforementioned method.

From an assessment of the characteristics of the method according to the present invention, the advantages that they allow to obtain are evident.

The method allows the production of sandwich panels without the use of binding agents, which allows a reduction in environmental impact.

In addition, a further reduction in environmental impact is achieved thanks to the use of recycled fibres.

Finally, it is clear that modifications and variations can be made to the method described and shown herein without thereby departing from the scope of protection defined by the claims.

## Claims

1. Method for producing sandwich panels (1) having at least a first outer layer (2), a second outer layer (3) and an inner core (4) interposed between the first outer layer (2) and the second outer layer (3);
the method comprises:
- a step of feeding, during which one or more first components (7) and one or more second components (8) and a matrix (9) are provided;
- a step of interposing, during which the matrix (9) is interposed between the one or more first components (7) and the one or more second components (8) to form a base structure (10);
- a step of compressing, during which a pressure is applied onto the base structure (10);
- a step of heating, during which the base structure (10) is heated to a temperature of at least 100°C; and
- a step of cooling, during which the base structure (10) is cooled;
wherein each first component (7) and each second component (8) comprises recycled fibres;
wherein the step of cooling is performed following the step of heating;
wherein no binding agents are used between the one or more first components (7) and the matrix (9) and between the one or more second components (8) and the matrix (9).

2. Method according to claim 1, wherein during the step of feeding, the one or more first components (7), the one or more second components (8) and the matrix (9) are advanced along respective first advancement paths (P) and to a combination station at which the one or more first components (7), the one or more second components (8) and the matrix (9) start to contact each other to obtain the base structure (10);
wherein during the step of compressing, the step of heating and the step of cooling the base structure (10) is advanced along a second advancement path (Q).

3. Method according to claim 2, wherein during the step of compressing pressure is applied by a plurality of pairs of cylinders (12), each pair of cylinders (12) having a first cylinder (13) and a second cylinder (14);
wherein the base structure (10) is interposed between each first cylinder (13) and the respective second cylinder (14).

4. Method according to claim 3, wherein each first cylinder (13) and each second cylinder (14) is configured to act on, respectively, the one or more first components (7) and the one or more second components (8) by means of, respectively, a first belt (16) and a second belt (17);
wherein a minimum distance between each first cylinder (13) and the respective second cylinder (14) decreases in the forward direction (D) of the base structure (10).

5. Method according to claim 3 or 4, wherein the respective first cylinders (13) and/or the respective second cylinders (14) of one or more pairs of cylinders (12) are heating cylinders for performing the step of heating.

6. Method according to claim 5, wherein the respective first cylinders (13) and/or the respective second cylinders (14) of one or more other pairs of cylinders (12) are cooling cylinders and are controlled at a temperature lower than the temperature of the heating cylinders to perform the step of cooling.

7. Method according to claim 6, wherein the heating cylinders are arranged upstream of the cooling cylinders.

8. Method according to any one of the preceding claims, wherein during the step of cooling the base structure (10) is cooled to a temperature of less than 50°C.

9. Method according to any one of the preceding claims, wherein the recycled fibres are selected from the group consisting of recycled carbon fibres, recycled aramid fibres, recycled glass fibres and recycled natural fibres.

10. Method according to any one of the preceding claims, wherein the matrix (9) comprises one or more of the following materials: thermoplastic materials, thermosetting materials, open cell structured foams, closed cell structured foams, balsa wood, syntactic foams, self-expanding components, honeycomb structures.

11. Method according to any one of the preceding claims, wherein each first component (7) and each second component (8) is a non-woven fabric and/or comprises a thermoplastic material.

12. Sandwich panel (1) comprising at least a first outer layer (2), a second outer layer (3) and an inner core (4) interposed between the first outer layer (2) and the second outer layer (3);
wherein each first outer layer (2) and each second outer layer (3) comprises recycled fibres;
wherein the sandwich panel (1) has been produced by the method according to any one of claims 1 to 11 and wherein no binding agents are present between the one or more first components (7) and the matrix (9) and between the one or more second components (8) and the matrix (9).

13. A computer program, loadable into a memory of a processing unit and comprising instructions suitable for performing the steps of the method according to any one of claims 1 to 11.
